# FASCICULE DE BREVET EUROPEEN

(11) **EP 1 946 980 B1**
(45) Date de publication et mention de la délivrance du brevet: **10.03.2010**
(21) Numéro de dépôt: 08150052.2
(22) Date de dépôt: 04.01.2008
(51) Int. Cl.: B60R 21/34

(54) **Dispositif de protection des piétons en cas de choc frontal avec un véhicule automobile et véhicule automobile équipé d'un tel disspositif de protection des piétons**
Vorrichtung zum Schutz von Fußgängern im Fall eines Frontalzusammenstoßes mit einem Kraftfahrzeug und mit einer solchen Vorrichtung zum Schutz von Fußgängern ausgerüstetes Kraftfahrzeug
Device for protecting pedestrians in the event of a frontal crash with an automobile and automobile equipped with such a device for protecting pedestrians

(30) Priorité: 18.01.2007 FR 0752745
(43) Date de publication de la demande: 23.07.2008
(73) Titulaire: Peugeot Citroën Automobiles SA, 78140 Vélizy-Villacoublay (FR)
(72) Inventeur: Groeninck, François, 95170 Deuil La Barre (FR); Bienvenue, Thierry, 93700 Drancy (FR)
(74) Mandataire: Allain, Laurent

(56) Documents cités:
- EP-A- 1 394 000
- EP-A- 1 810 894
- DE-A1- 10 305 329
- DE-A1-102004 055 604
- DE-A1-102004 062 105

## Description

La présente invention concerne un dispositif de protection des piétons en cas de choc frontal avec un véhicule automobile, ainsi qu'un véhicule automobile équipé d'un tel dispositif de protection.

Généralement, les véhicules automobiles comportent un capot articulé dans sa partie arrière sur la structure du véhicule, de façon que son ouverture s'effectue par l'avant, ce capot étant relié dans sa partie arrière à la structure du véhicule par des moyens de liaison permettant à ce capot de pivoter.

Dans certains véhicules automobiles, les moyens de liaison du capot avec la structure du véhicule sont associés à des moyens de déplacement vers le haut de la partie arrière du capot aptes à être activés lorsqu'un choc piéton est détecté dans la partie frontale du véhicule.

Ces moyens de déplacement permettent d'éloigner la zone d'impact entre la tête du piéton et le capot, des éléments rigides situés sous le capot, afin de diminuer la gravité des chocs du piéton sur ce capot, notamment au niveau de la tête. Ce type de capot pourvu de tels moyens d'élévation est couramment désigné par "capot actif".

En effet, en cas de choc frontal d'un véhicule automobile avec un piéton, la tête du piéton vient en général heurter violemment le capot. Lors de l'impact de la tête du piéton sur le capot, il se produit un enfoncement du capot jusqu'à un impact éventuel avec des éléments rigides situés sous le capot, tels que la batterie, des éléments porteurs...De même, il peut se produire un impact direct avec des zones rigides du capot. Ces impacts contre des éléments rigides constituent la cause principale des décès ou des blessures graves des piétons renversés.

On connaît des dispositifs de protection des piétons comprenant des moyens de déplacement vers le haut de la partie arrière du capot, cette élévation s'accompagnant d'une rotation du capot autour de la serrure du mécanisme d'ouverture du capot, située en partie avant de ce capot, tandis que l'articulation ou charnière située en partie arrière est généralement directement supportée par les moyens de déplacement. De cette façon, l'activation des moyens de déplacement imprime à la charnière un mouvement vers le haut qui entraîne dans sa course le capot.

Un de ces dispositifs comprend au moins un ensemble formé par :
- un charnon fixe solidaire de la caisse du véhicule,
- un charnon mobile solidaire du capot,
- un charnon mobile intermédiaire comportant, à l'une de ses extrémités, un premier axe d'articulation sur le charnon mobile et, à l'autre de ses extrémités, un second axe d'articulation sur le charnon fixe, ledit second axe d'articulation étant situé derrière le premier axe d'articulation par rapport à l'avant du capot,
- des moyens de verrouillage et de déverrouillage de la rotation du premier axe d'articulation entre le charnon mobile et le charnon mobile intermédiaire dans les positions respectivement de fermeture et surélevée, lesdits moyens étant montés sur le premier axe d'articulation, et
- un moyen de transmission d'une poussée sur le charnon mobile lors du déverrouillage du premier axe d'articulation dans la position de fermeture du capot.

EP 1 810 894 qui n'est pas encore publié, montre un tel dispositif et sert de base à la présentation en deux parties de la revendication 1.

Le charnon fixe, le charnon mobile et le charnon mobile intermédiaire forment une charnière permettant de surélever la partie arrière du capot en cas de choc frontal. Dans un tel dispositif, les moyens de verrouillage et de déverrouillage de la rotation du premier axe d'articulation comprennent un système à cames commandé par un effet électromagnétique, lui même déclenché par un moyen de traitement en fonction du signal transmis par un système de détection. Lors du montage du véhicule, les moyens de verrouillage et de déverrouillage ne peuvent passer en électrophorèse alors que le montage du capot et du coffre du véhicule est toujours souhaité avant ce traitement.

Ainsi, on prévoit que les moyens de verrouillage et de déverrouillage du premier axe d'articulation peuvent être facilement enlevés et montés sur l'axe d'articulation. De la sorte, lors du passage de la charnière en électrophorèse, les moyens de verrouillage et de déverrouillage sont enlevés de cette charnière et sont remplacés par une pièce temporaire qui peut passer en électrophorèse. Cette pièce temporaire permet de bloquer le premier axe d'articulation de sorte à empêcher le mouvement relatif entre le charnon mobile et le charnon mobile intermédiaire.

Cependant, l'utilisation de cette pièce temporaire présente un certain nombre d'inconvénients. En effet, lors de l'enlèvement de la pièce après le passage en électrophorèse, il est impossible de conserver la position du charnon mobile intermédiaire par rapport au charnon mobile sans un effort du monteur qui ne dispose alors que d'une main pour positionner et mettre en place les moyens de verrouillage et de déverrouillage du premier axe d'articulation. D'autre part, ces manipulations comportent un fort risque de déclenchement intempestif du dispositif de protection.

L'invention vise à pallier ces inconvénients en proposant un dispositif de protection des piétons ne nécessitant pas l'utilisation d'une pièce temporaire lors du passage en électrophorèse de la charnière et avant le montage des moyens de verrouillage et de déverrouillage du premier axe d'articulation.

A cet effet, l'invention concerne un dispositif de protection des piétons en cas de choc frontal avec un véhicule automobile comprenant des moyens de déplacement de la partie arrière du capot entre une position de fermeture et une position surélevée et aptes à être activés lors de la détection d'un choc piéton dans la partie frontale du véhicule, les moyens de déplacement de la partie arrière du capot comprenant au moins un ensemble formé par :
- un charnon fixe solidaire de la caisse du véhicule,
- un charnon mobile solidaire du capot,
- un charnon mobile intermédiaire comportant, à l'une de ses extrémités, un premier axe d'articulation sur le charnon mobile et, à l'autre de ses extrémités, un second axe d'articulation sur le charnon fixe, ledit second axe d'articulation étant situé derrière le premier axe d'articulation par rapport à l'avant du capot,
- des moyens de verrouillage et de déverrouillage de la rotation du premier axe d'articulation entre le charnon mobile et le charnon mobile intermédiaire dans les positions respectivement de fermeture et surélevée, lesdits moyens étant montés sur le premier axe d'articulation, et
- un moyen de transmission d'une poussée sur le charnon mobile lors du déverrouillage du premier axe d'articulation dans la position de fermeture du capot,
le dispositif étant caractérisé en ce qu'il comprend au moins un ensemble de montage comportant un élément de blocage de la rotation du charnon mobile par rapport au charnon mobile intermédiaire avant le montage des moyens de verrouillage et de déverrouillage de la rotation du premier axe d'articulation et, associés auxdits moyens de verrouillage et de déverrouillage, un élément de déplacement de l'élément de blocage lors du montage de ces moyen de verrouillage et de déverrouillage sur le premier axe d'articulation pour libérer la rotation du charnon mobile par rapport au charnon mobile intermédiaire.

Un tel dispositif permet donc de se passer de la pièce temporaire avant le montage des moyens de verrouillage et de déverrouillage du premier axe d'articulation, ce qui facilite le montage des différents éléments. De plus, en cas de démontage du dispositif, l'élément de blocage peut être à nouveau utilisé. Les risques de déclenchement intempestif lors du montage sont en outre largement réduits.

En particulier, l'élément de blocage est formé par un cylindre placé entre deux alésages ménagés respectivement dans le charnon mobile et dans le charnon mobile intermédiaire et disposés l'un en regard de l'autre dans la position de montage des moyens de verrouillage et de déverrouillage du premier axe d'articulation. L'élément de déplacement est formé par un doigt porté par les moyens de verrouillage et de déverrouillage et destiné à pénétrer dans l'alésage d'un des charnons lors du montage desdits moyens pour pousser le cylindre dans l'alésage de l'autre charnon.

Selon d'autres caractéristiques de l'invention :
- le premier axe d'articulation comprend :
   - une première pièce solidaire en rotation avec le charnon mobile intermédiaire et pourvue d'un alésage,
   - une seconde pièce associée aux moyens de verrouillage et de déverrouillage et agencée pour pénétrer dans l'alésage de la première pièce lors du montage desdits moyens, et
   - un élément de fixation de la première et de la seconde pièces entre elles,
- le charnon mobile intermédiaire a la forme d'un col de cygne dont la partie recourbée est dirigée vers le haut,
- les moyens de verrouillage et de déverrouillage de la rotation du premier axe d'articulation comprennent un système à cames commandé par un effet électromagnétique, lui même déclenché par un moyen de traitement en fonction du signal transmis par un système de détection,
- le moyen de transmission d'une poussée sur le charnon mobile est formé par un ressort de compression dont une première extrémité est fixée sur les moyens de verrouillage et de déverrouillage et dont une seconde extrémité est fixée sur le levier relié au charnon mobile par l'intermédiaire du premier axe d'articulation,
- les moyens de verrouillage et de déverrouillage, le ressort de compression et le levier forment un ensemble destiné à être monté sur le premier axe d'articulation,
- le charnon mobile est pourvu d'une moulure en creux autour de son alésage permettant de dégager l'extrémité de l'élément de déplacement lors des mouvements liés au déverrouillage du premier axe d'articulation.

L'invention concerne également un véhicule automobile, caractérisé en ce qu'il comprend un dispositif de protection des piétons tel que décrit ci-dessus.

D'autres aspects et avantages de l'invention apparaîtront au cours de la description qui suit, donnée à titre d'exemple et faite en référence aux dessins annexés, sur lesquels :
- la Fig. 1 est une vue schématique de la partie avant d'un véhicule automobile montrant la localisation des moyens de déplacement du capot appartenant au dispositif de protection des piétons, conforme à l'invention,
- la Fig. 2 est une vue schématique en perspective des moyens de déplacement de la partie arrière du capot,
- la Fig. 3 est une vue schématique en perspective du charnon fixe et du charnon mobile d'une charnière de capot,
- la Fig. 4 est une vue schématique partielle en coupe des moyens de déplacement de la partie arrière du capot, les moyens de verrouillage et de déverrouillage n'étant pas montés sur le premier axe d'articulation,
- la Fig. 5 est une schématique similaire à la Fig. 4, les moyens de verrouillage et de déverrouillage étant partiellement montés sur le premier axe d'articulation,
- la Fig. 6 est une vue schématique similaire à la Fig. 4, les moyens de verrouillage et de déverrouillage étant montés sur le premier axe d'articulation,
- la Fig. 7 est une vue schématique similaire à la figure 6, selon une variante de réalisation de l'invention,
- les Figs 8 et 9 sont des vues schématiques de côté montrant le déplacement de la partie arrière du capot lors de l'activation des moyens de déplacement à la suite d'un choc avec un piéton.

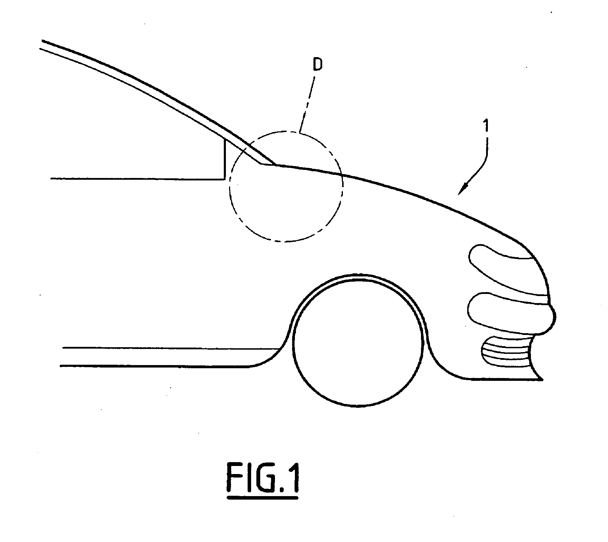

Sur la Fig. 1, on a représenté un véhicule automobile pourvu d'un capot équipé d'un dispositif de protection des piétons en cas de choc frontal.

Le dispositif de protection des piétons comprend des moyens de déplacement vers le haut de la partie arrière du capot 1, aptes à être activés lorsqu'un choc piéton est détecté dans la partie frontale du véhicule. Ces moyens de déplacement sont situés dans la zone D.

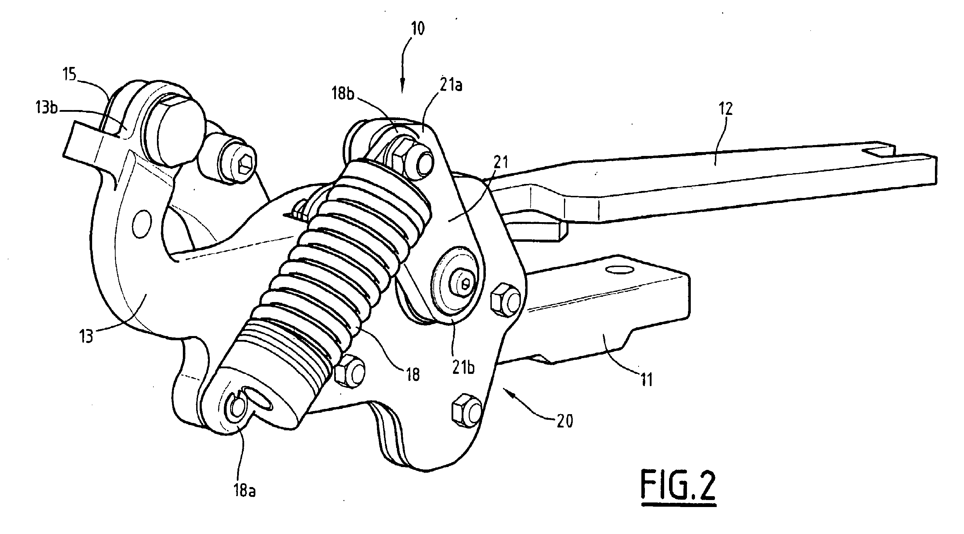

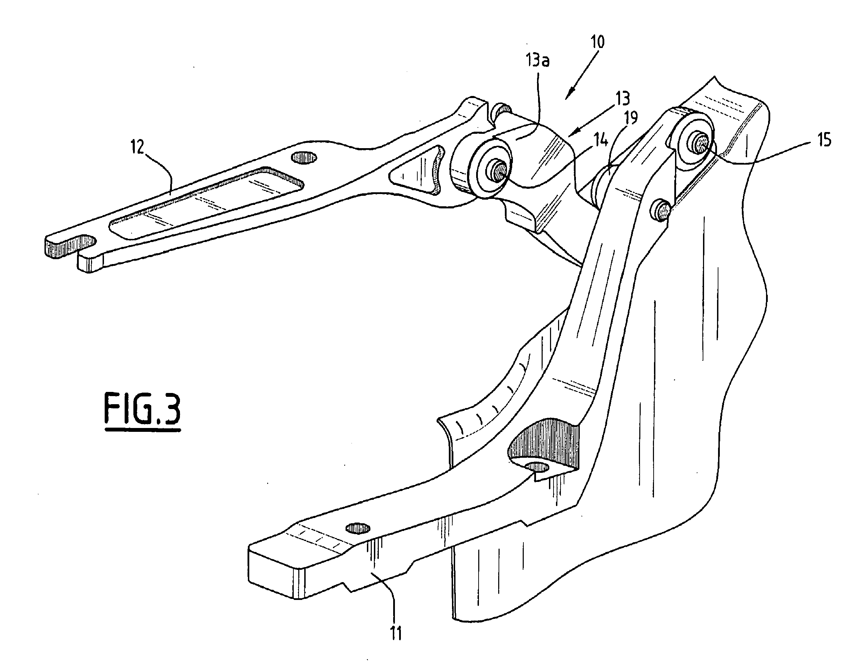

Les moyens de déplacement représentés de manière détaillée sur les Figs. 2 et 3 sont désignés par la référence générale 10.

Par souci de clarté dans la description, à chaque fois qu'il sera fait référence aux moyens de déplacement 10 et à ses éléments constitutifs, il faudra bien entendu comprendre que ces moyens de déplacement comprennent deux ensembles disposés chacun sur un côté du capot 1.

Les moyens de détection de l'impact sur la partie frontale du véhicule ainsi que les moyens de traitement et de commande pilotant les moyens de déplacement 10 de la partie arrière du capot 1 sont classiques et parfaitement connus de l'homme de l'art.

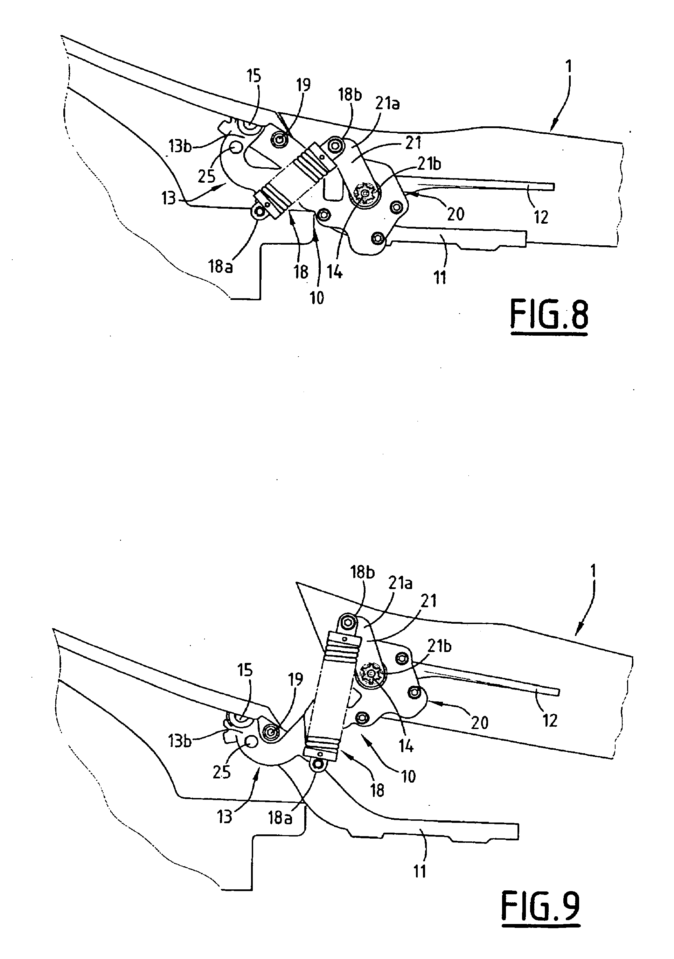

Les moyens de déplacement 10 de la partie arrière du capot 1 sont mobiles entre une position de fermeture représentée sur la Fig. 8 et une position surélevée représentée sur la Fig. 9. Ces moyens 10 sont conformés pour être réarmés manuellement suite à leur activation de façon à être de nouveau opérationnels.

Ces moyens de déplacement 10 comprennent un charnon fixe 11 solidaire de la caisse du véhicule par des moyens appropriés de type classique et un charnon mobile 12 solidaire du capot 1 également par des moyens appropriés de type connu. Les charnons, respectivement fixe 11 et mobile 12, sont reliés entre eux par un charnon mobile intermédiaire 13 comportant, à l'une de ses extrémités 13a, un premier axe d'articulation 14 sur le charnon mobile 12 et, à l'autre de ses extrémités 13b, un second axe d'articulation 15 sur le charnon fixe 11, comme représenté sur la Fig. 3. Le charnon mobile intermédiaire 13 présente une forme déterminée pour que le second axe d'articulation 15 soit situé derrière le premier axe d'articulation 14 par rapport à l'avant du capot 1. En effet, le charnon mobile intermédiaire 13 a la forme d'un col de cygne dont la partie recourbée 13b est dirigée vers le haut et à l'extrémité de laquelle est disposé le second axe d'articulation 15.

Le dispositif comprend également des moyens de verrouillage et de déverrouillage de la rotation du premier axe d'articulation 14 dans les positions respectivement de fermeture et surélevée du capot 1. Ces moyens de verrouillage et de déverrouillage désignés par la référence générale 20 comprennent un système à cames commandé par un effet électromagnétique.

Enfin, le dispositif de protection comporte aussi un moyen de transmission d'une poussée sur le charnon mobile 12 et qui est constitué par un ressort de compression 18 dont une première extrémité 18a est fixée sur la pièce 20 et dont une seconde extrémité 18b est fixée sur une première extrémité 21 a d'un levier 21 relié, par sa seconde extrémité 21 b, au charnon mobile 12 par l'intermédiaire du premier axe d'articulation 14. La fixation de l'extrémité 18a sur la pièce 20 est une fixation annulaire permettant de laisser passer des moyens de fixation au charnon mobile intermédiaire 13.

Les moyens 20 de verrouillage et de déverrouillage, le ressort de compression 18 et le levier 21 forment un ensemble indépendant qui peut être facilement enlevé et monté sur le premier axe d'articulation 14. Cet ensemble indépendant n'est pas apte à passer en électrophorèse. Par conséquent, cet ensemble indépendant n'est pas monté sur le premier axe d'articulation 14 au cours de cette étape de traitement.

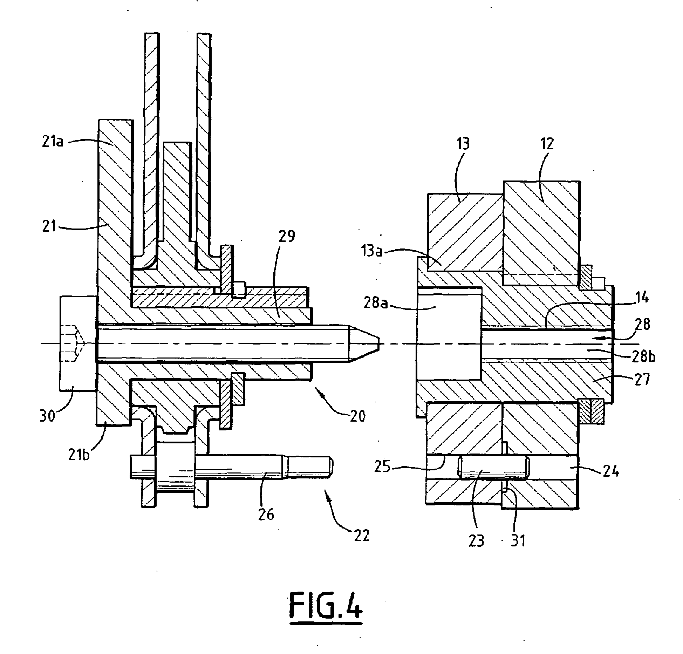

Afin d'empêcher la rotation du charnon mobile intermédiaire 13 par rapport au charnon mobile 12 pendant l'étape d'électrophorèse, le dispositif selon l'invention comprend un ensemble de montage désigné par la référence générale 22 et représenté en détail sur les Figs. 4 à 7.

Cet ensemble de montage 22 comprend un élément de blocage 23 apte à se déplacer sous l'action d'une force dans deux alésages 24 et 25 prévus respectivement dans le charnon mobile 12 et dans le charnon mobile intermédiaire 13. L'élément de blocage est par exemple un cylindre 23 et les alésages 24 et 25 présentent une forme complémentaire de ce cylindre 23. En position de montage, c'est-à-dire avant le montage des moyens de verrouillage et de déverrouillage 20 sur le premier axe d'articulation 14, les alésages 24 et 25 se trouvent en regard l'un de l'autre et l'élément de blocage 23 est disposé dans ces deux alésages, comme représenté sur la Fig. 4. De la sorte, le charnon mobile intermédiaire 13 et le charnon mobile 12 sont fixes l'un par rapport à l'autre et la charnière peut subir l'étape d'électrophorèse.

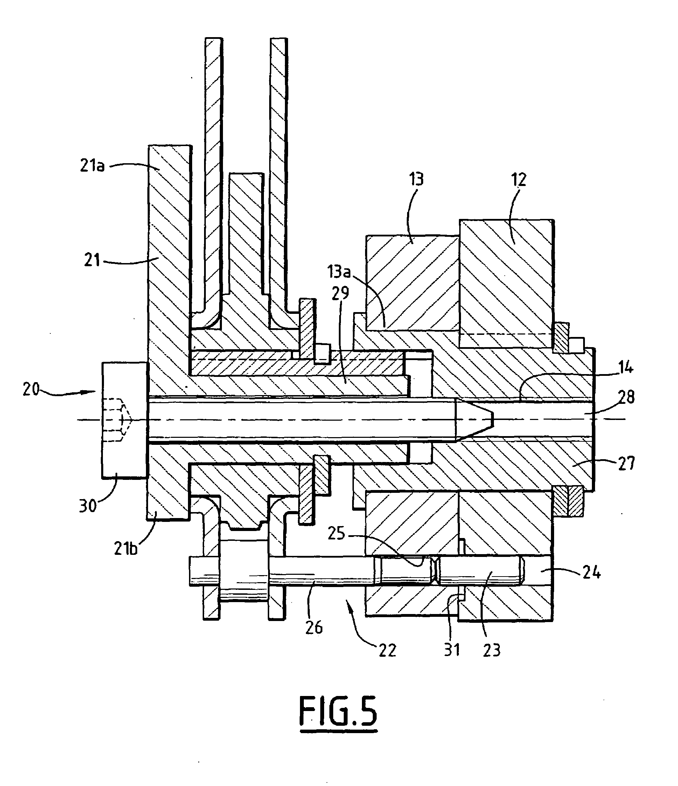

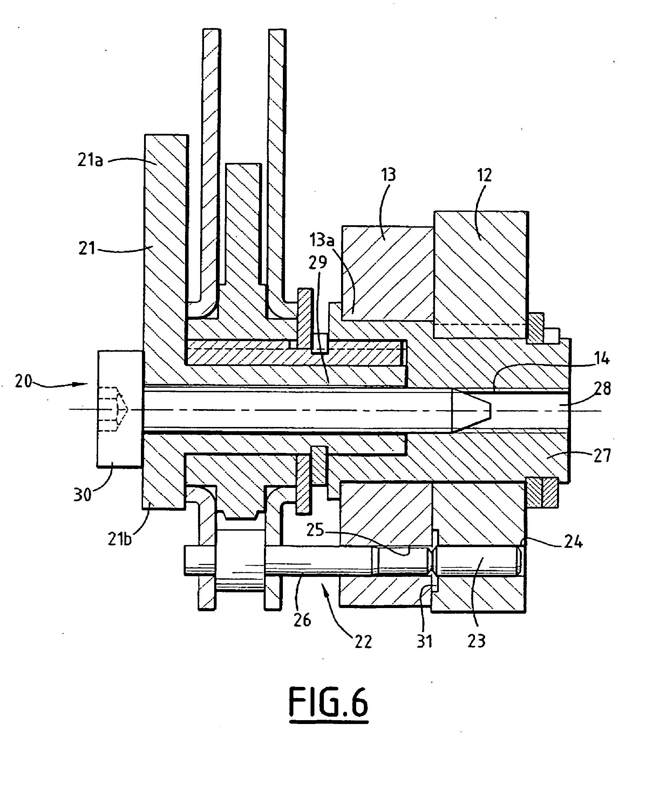

Le premier axe d'articulation 14 comprend une première pièce 27 à laquelle est fixé le charnon mobile 12 et à laquelle est associé en rotation le charnon mobile intermédiaire 13. A cet effet, la pièce 27 peut être sensiblement cylindrique et cannelée, goupillée ou clavetée à l'endroit où elle est associée au charnon mobile 12 et lisse à l'endroit où elle est associée au charnon mobile intermédiaire 13. La première pièce 27 est pourvue d'un alésage 28. Le premier axe d'articulation 14 comprend en outre une deuxième pièce 29 associée aux moyens de verrouillage et de déverrouillage 20 du premier axe d'articulation 14 et agencée pour pénétrer dans l'alésage 28 de la première pièce 27 lors du montage desdits moyens de verrouillage et de déverrouillage 20, comme représenté sur les Figs. 5 et 6.

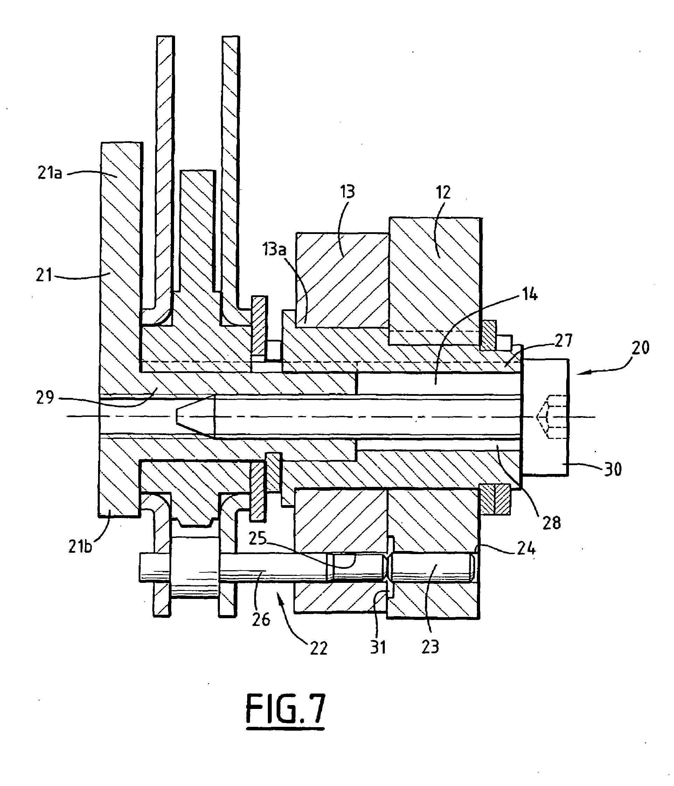

Cette deuxième pièce 29 peut porter le levier 21. Comme on peut le voir sur les Figs. 4 à 6, l'alésage 28 présente une partie 28a dont la section est sensiblement égale à la section de la seconde pièce 29 et une partie 28b de section réduite et taraudée au diamètre de la vis de fixation 30. Lors du montage des moyens de verrouillage et de déverrouillage 20, la seconde pièce 29 vient donc en butée dans le fond de la partie 28a de la section la plus grande de l'alésage 28, comme représenté sur la Fig. 6. La solidarisation des moyens de verrouillage et de déverrouillage 20 se fait par le serrage d'un élément de fixation 30. A cet effet, la seconde pièce 29 peut être pourvue d'un alésage dans lequel passe une vis formant élément de fixation 30. La vis s'engage dans la partie 28b de section réduite de l'alésage 28 de la première pièce 27 et est serrée dans cette partie de sorte que la seconde pièce 29 est fixée à la première pièce 27 lorsque le montage a été effectué, comme représenté sur la Fig. 6. Selon une variante de réalisation représentée sur la Fig. 7, la vis peut être introduite du côté du charnon mobile 12 avec des modifications dans la section des alésages.

Un élément de déplacement 26 de l'élément de blocage 23 est prévu sur les moyens de verrouillage et de déverrouillage 20. Cet élément 26 est agencé pour déplacer l'élément de blocage 23 lors du montage des moyens de verrouillage et de déverrouillage 20 afin de rendre possible la rotation du premier axe d'articulation 14 et de permettre la rotation du charnon mobile intermédiaire 13 par rapport au charnon mobile 12. L'élément de déplacement est par exemple un doigt 26 s'étendant sensiblement parallèlement à la seconde pièce 29. Comme représenté sur les Figs. 5 et 6, lors du serrage de l'élément de serrage 30, l'élément de déplacement 26 pénètre dans l'alésage 25 et pousse l'élément de blocage 23 de sorte que l'élément de blocage se trouve uniquement dans l'alésage 24 quand les moyens de verrouillage et de déverrouillage ont été montés sur le premier axe d'articulation 14. Ainsi, une fois que ce montage a été effectué, la rotation du charnon mobile intermédiaire 13 par rapport au charnon mobile 12 est rendue possible.

Selon une variante de réalisation, le charnon mobile 12 est pourvu d'une moulure en creux 31 autour de son alésage 24 permettant de dégager l'extrémité de l'élément de déplacement 26 lors des mouvements liés au déverrouillage du premier axe d'articulation 14. Une telle réalisation permet d'éviter des frottements intempestifs lors de ce déverrouillage.

En utilisation normale, le capot 1 ainsi que les différents éléments du dispositif de protection des piétons se trouvent dans la position représentée à la Fig. 8, le ressort 18 étant comprimé.

Dès qu'un système de détection de type connu, non représenté, identifie un impact sur le véhicule automobile susceptible d'être un choc avec un piéton, un signal est transmis à un boîtier de commande des moyens 20 de verrouillage et de déverrouillage de la rotation du premier axe 14 qui libère la rotation de ce premier axe 14 entre le charnon mobile 12 et le charnon mobile intermédiaire 13. Le ressort de compression 18 exerce donc une poussée vers le haut sur le charnon mobile 12 et le charnon mobile intermédiaire 13 tourne librement autour du second axe d'articulation 15. Le ressort de compression 18 se détend jusqu'au blocage programmé du premier axe d'articulation 14 par les moyens 20 de verrouillage de cet axe 14. L'élément de blocage 26 peut jouer ce rôle de blocage en limitant la course du charnon mobile intermédiaire 13. Le capot 1 est alors en position haute comme montrée à la Fig. 9, si bien que si un choc a lieu avec le piéton, il sera moins sévère pour celui-ci.

Le dispositif de protection des piétons selon l'invention permet, en cas de choc frontal, de remettre en état de fonctionnement les moyens de déplacement de la partie arrière du capot de façon aisée et tout en évitant l'immobilisation du véhicule et un surcoût de réparation pour rétablir la fonction active de ce capot.

## Revendications

1. Dispositif de protection des piétons en cas de choc frontal avec un véhicule automobile comprenant des moyens de déplacement (10) de la partie arrière (1) du capot entre une position de fermeture et une position surélevée et aptes à être activés lors de la détection d'un choc piéton dans la partie frontale du véhicule, les moyens de déplacement (10) de la partie arrière du capot comprenant au moins un ensemble formé par :
- un charnon fixe (11) solidaire de la caisse du véhicule,
- un charnon mobile (12) solidaire du capot,
- un charnon mobile intermédiaire (13) comportant, à l'une de ses extrémités (13a), un premier axe d'articulation (14) sur le charnon mobile (12) et, à l'autre de ses extrémités (13b), un second axe d'articulation (15) sur le charnon fixe (11), ledit second axe d'articulation étant situé derrière le premier axe d'articulation (14) par rapport à l'avant du capot,
- des moyens de verrouillage et de déverrouillage (20) de la rotation du premier axe d'articulation (14) entre le charnon mobile (12) et le charnon mobile intermédiaire (13) dans les positions respectivement de fermeture et surélevé, lesdits moyens étant montés sur le premier axe d'articulation (14), et
- un moyen de transmission (18) d'une poussée sur le charnon mobile (12) lors du déverrouillage du premier axe d'articulation (14) dans la position de fermeture du capot,
le dispositif étant **caractérisé en ce qu'**il comprend au moins un ensemble de montage (22) comportant un élément de blocage (23) de la rotation du charnon mobile (12) par rapport au charnon mobile intermédiaire (13) avant le montage des moyens de verrouillage et de déverrouillage (20) de la rotation du premier axe d'articulation (14) et, associés auxdits moyens de verrouillage et de déverrouillage (20), un élément de déplacement (26) de l'élément de blocage lors du montage de ces moyen de verrouillage et de déverrouillage (20) sur le premier axe d'articulation (14) pour libérer la rotation du charnon mobile (12) par rapport au charnon mobile intermédiaire (13).

2. Dispositif selon la revendication 1, **caractérisé en ce que** l'élément de blocage est formé par un cylindre (23) placé entre deux alésages (24, 25) ménagés respectivement dans le charnon mobile (12) et dans le charnon mobile intermédiaire (13) et disposés l'un en regard de l'autre dans la position de montage des moyens de verrouillage et de déverrouillage (20) du premier axe d'articulation (14).

3. Dispositif selon la revendication 2, **caractérisé en ce que** l'élément de déplacement est formé par un doigt (26) porté par les moyens de verrouillage et de déverrouillage et destiné à pénétrer dans l'alésage (25) d'un (13) des charnons lors du montage desdits moyens pour pousser le cylindre (23) dans l'alésage (24) de l'autre (12) charnon.

4. Dispositif selon l'une des revendications 1 à 3, **caractérisé en ce que** le premier axe d'articulation (14) comprend :
- une première pièce (27) solidaire en rotation avec le charnon mobile intermédiaire (13) et pourvue d'un alésage (28),
- une seconde pièce (29) associée aux moyens de verrouillage et de déverrouillage (20) et agencée pour pénétrer dans l'alésage (28) de la première pièce (27) lors du montage desdits moyens (20), et
- un élément de fixation (30) de la première et de la seconde pièces (27, 29) entre elles.

5. Dispositif selon l'une des revendications 1 à 4, **caractérisé en ce que** le charnon mobile intermédiaire (13) a la forme d'un col de cygne dont la partie recourbée est dirigée vers le haut.

6. Dispositif selon l'une des revendications 1 à 5, **caractérisé en ce que** les moyens de verrouillage et de déverrouillage (20) de la rotation du premier axe d'articulation (14) comprennent un système à cames commandé par un effet électromagnétique, lui même déclenché par un moyen de traitement en fonction du signal transmis par un système de détection.

7. Dispositif selon l'une des revendications 1 à 6, **caractérisé en ce que** le moyen de transmission (18) d'une poussée sur le charnon mobile (12) est formé par un ressort de compression dont une première extrémité (18a) est fixée sur les moyens de verrouillage et de déverrouillage (20) et dont une seconde extrémité (18b) est fixée sur un levier (21) relié au charnon mobile (12) par l'intermédiaire du premier axe d'articulation (14).

8. Dispositif selon l'une des revendications 1 à 7, **caractérisé en ce que** les moyens de verrouillage et de déverrouillage (20), le ressort de compression (18) et le levier (21) forment un ensemble destiné à être monté sur le premier axe d'articulation (14).

9. Véhicule automobile, **caractérisé en ce qu'**il comprend un dispositif de protection des piétons selon l'une quelconque des revendications précédentes.

## Claims

1. Device for protecting pedestrians in the event of a frontal impact with an automobile, comprising displacement means (10) displacing the rear part (1) of the bonnet between a closure position and an elevated position and suited to be activated on detection of a pedestrian impact in the front part of the vehicle, the displacement means (10) of the rear part of the bonnet comprising at least one assembly formed by:
- a fixed knuckle (11) integral with the body of the vehicle,
- a mobile knuckle (12) integral with the bonnet,
- an intermediate mobile knuckle (13) comprising, at one of its ends (13a), a first articulation axis (14) on the mobile knuckle (12) and, at the other of its ends (13b), a second articulation axis (15) on the fixed knuckle (11), the said second articulation axis being situated behind the first articulation axis (14) with respect to the front of the bonnet,
- locking and unlocking means (20) of the rotation of the first articulation axis (14) between the mobile knuckle (12) and the intermediate mobile knuckle (13) in the respective closure and raised positions, the said means being mounted on the first articulation axis (14), and
- a transmission means (18) of a thrust on the mobile knuckle (12) on unlocking of the first articulation axis (14) in the closure position of the bonnet,
the device being **characterized in that** it comprises at least one mounting assembly (22) comprising a blocking element (23) of the rotation of the mobile knuckle (12) with respect to the intermediate mobile knuckle (13) before the mounting of the locking and unlocking means (20) of the rotation of the first articulation axis (14) and, associated with the said locking and unlocking means (20), a displacement element (26) of the blocking element on the mounting of these locking and unlocking means (20) on the first articulation axis (14) to free the rotation of the mobile knuckle (12) with respect to the intermediate mobile knuckle (13) .

2. Device according to Claim 1, **characterized in that** the blocking element is formed by a cylinder (23) placed between two bores (24, 25) arranged respectively in the mobile knuckle (12) and in the intermediate mobile knuckle (13) and arranged one facing the other in the mounting position of the locking and unlocking means (20) of the first articulation axis (14).

3. Device according to Claim 2, **characterized in that** the displacement element is formed by a finger (26) carried by the locking and unlocking means and intended to penetrate into the bore (25) of one (13) of the knuckles on mounting of the said means to push the cylinder (23) in the bore (24) of the other knuckle (12).

4. Device according to one of Claims 1 to 3, **characterized in that** the first articulation axis (14) comprises:
- a first piece (27) integral in rotation with the intermediate mobile knuckle (13) and provided with a bore (28),
- a second piece (29) associated with the locking and unlocking means (20) and arranged to penetrate into the bore (28) of the first piece (27) on mounting of the said means (20), and
- a fixing element (30) of the first and of the second pieces (27, 29) with each other.

5. Device according to one of Claims 1 to 4, **characterized in that** the intermediate mobile knuckle (13) has the shape of a swan's neck, the curved part of which is directed upwards.

6. Device according to one of Claims 1 to 5, **characterized in that** the locking and unlocking means (20) of the rotation of the first articulation axis (14) comprise a cam system controlled by an electromagnetic effect, which is itself tripped by a processing means as a function of the signal transmitted by a detection system.

7. Device according to one of Claims 1 to 6, **characterized in that** the transmission means (18) of a thrust on the mobile knuckle (12) is formed by a compression spring, a first end (18a) of which is fixed on the locking and unlocking means (20) and a second end (18b) of which is fixed on a lever (21) connected to the mobile knuckle (12) by means of the first articulation axis (14).

8. Device according to one of Claims 1 to 7, **characterized in that** the locking and unlocking means (20), the compression spring (18) and the lever (21) form an assembly intended to be mounted on the first articulation axis (14).

9. Automobile, **characterized in that** it comprises a device for protecting pedestrians according to any of the preceding claims.

## Patentansprüche

1. Schutzvorrichtung für Fußgänger bei Frontalzusammenstoß mit einem Kraftfahrzeug, die Mittel zum Bewegen (10) des hinteren Teils (1) der Motorhaube zwischen einer Schließposition und einer überhöhten Position aufweist und die beim Erfassen eines Fußgängeraufpralls in dem Vorderteil des Fahrzeugs aktiviert werden können, wobei die Mittel (10) zum Bewegen des hinteren Teils der Motorhaube mindestens eine Einheit aufweisen, die aus Folgendem ausgebildet ist:
- ein stationärer Scharnierteil (11), der fest mit dem Aufbau des Fahrzeugs verbunden ist,
- ein beweglicher Scharnierteil (12), der fest mit der Motorhaube verbunden ist,
- ein beweglicher Scharnierzwischenteil (13), der an einem seiner Enden (13a) eine erste Gelenkachse (14) auf dem beweglichen Scharnierteil (12) und, an seinem anderen Ende (13b), eine zweite Gelenkachse (15) auf dem stationären Scharnierteil (11) aufweist, wobei die zweite Gelenkachse bezogen auf die Vorderseite der Motorhaube hinter der ersten Gelenkachse (14) liegt,
- Ver- und Entriegelungsmittel (20) des Drehens der ersten Gelenkachse (14) zwischen dem beweglichen Scharnierteil (12) und dem beweglichen Scharnierzwischenteil (13) in jeweils einer Schließ- und einer überhöhten Position, wobei die Mittel auf die erste Gelenkachse (14) montiert sind, und
- Mittel (18) zum Übertragen eines Schubs auf den beweglichen Scharnierteil (12) beim Entriegeln der ersten Gelenkachse (14) in der Schließposition der Motorhaube,
wobei die Vorrichtung **dadurch gekennzeichnet ist, dass** sie mindestens eine Montageeinheit (22) aufweist, die ein Element (23) zum Blockieren der Drehung des beweglichen Scharnierteils (12) in Bezug zu dem beweglichen Scharnierzwischenteil (13) vor der Montage der Ver- und Entriegelungsmittel (20) der Drehung der ersten Gelenkachse (14) aufweist, und, verbunden mit den Ver- und Entriegelungsmitteln (20) ein Element (26) zum Bewegen des Blockierelements bei der Montage dieser Ver- und Entriegelungsmittel auf der ersten Gelenkachse (14), um die Drehung des beweglichen Scharnierteils (12) in Bezug zu dem beweglichen Scharnierzwischenteil (13) freizugeben.

2. Vorrichtung nach Anspruch 1, **dadurch gekennzeichnet, dass** das Blockierelement aus einem Zylinder (23) besteht, der zwischen zwei Bohrungen (24, 25) platziert ist, die jeweils in dem beweglichen Scharnierteil (12) und in dem beweglichen Scharnierzwischenteil (13) eingerichtet sind und einander gegenüber in einer Montageposition der Ver-und Entriegelungsmittel (20) der ersten Gelenkachse (14) angeordnet sind.

3. Vorrichtung nach Anspruch 2, **dadurch gekennzeichnet, dass** das Bewegungselement aus einem Finger (26) gebildet ist, der von den Ver- und Entriegelungsmitteln getragen wird und dazu bestimmt ist, in die Bohrung (25) eines (13) der Scharnierteile bei der Montage der Mittel einzudringen, um den Zylinder (23) in die Bohrung (24) des anderen (14) Scharnierteils zu schieben.

4. Vorrichtung nach einem der Ansprüche 1 bis 3, **dadurch gekennzeichnet, dass** die erste Gelenkachse (14) Folgendes aufweist:
- einen ersten Teil (27), der in Drehung fest mit dem beweglichen Scharnierzwischenteil (13) verbunden und mit einer Bohrung (28) versehen ist,
- einen zweiten Teil (29), der mit den Ver- und Entriegelungsmitteln (20) verbunden und eingerichtet ist, um in die Bohrung (28) des ersten Teils (27) bei der Montage der Mittel (20) einzudringen, und
- ein Element (30) zum Befestigen des ersten und des zweiten Teils (27, 29) untereinander.

5. Vorrichtung nach einem der Ansprüche 1 bis 4, **dadurch gekennzeichnet, dass** der bewegliche Scharnierzwischenteil (13) die Form eines Schwanenhalses hat, dessen zurückgebogener Teil nach oben gerichtet ist.

6. Vorrichtung nach einem der Ansprüche 1 bis 5, **dadurch gekennzeichnet, dass** die Mittel (20) zum Ver- und Entriegeln der Drehung der ersten Gelenkachse (14) ein Nockensystem aufweisen, das von einer elektromagnetischen Kraft gesteuert wird, die selbst von einem Verarbeitungsmittel in Abhängigkeit von einem Signal, das von einem Erfassungssystem gesendet wird, ausgelöst wird.

7. Vorrichtung nach einem der Ansprüche 1 bis 6, **dadurch gekennzeichnet, dass** das Mittel (18) zum Übertragen eines Schubs auf den beweglichen Scharnierteil (12) aus einer Druckfeder gebildet ist, von der ein Endteil (18a) auf den Ver- und Entriegelungsmitteln (20) befestigt ist, und von der ein zweites Ende (18b) auf einem Hebel (21) befestigt ist, der mit dem beweglichen Scharnierteil (12) über die erste Gelenkachse (14) verbunden ist.

8. Vorrichtung nach einem der Ansprüche 1 bis 7, **dadurch gekennzeichnet, dass** die Ver- und Entriegelungsmittel (20), die Druckfeder (18) und der Hebel (21) eine Einheit bilden, die dazu bestimmt ist, auf die erste Gelenkachse (14) montiert zu werden.

9. Kraftfahrzeug, **dadurch gekennzeichnet, dass** es eine Schutzvorrichtung der Fußgänger nach einem der vorhergehenden Ansprüche aufweist.
